# EUROPÄISCHE PATENTSCHRIFT

(11) **EP 1 913 667 B1**
(45) Veröffentlichungstag und Bekanntmachung des Hinweises auf die Patenterteilung: **04.05.2016**
(21) Anmeldenummer: 06762136.7
(22) Anmeldetag: 22.06.2006
(51) Int. Cl.: H02G 3/14, B65D 45/24

(54) **VORRICHTUNG MIT EINER LÖSBAREN RASTVERBINDUNG**
DEVICE COMPRISING A RELEASABLE LOCKING CONNECTION
DISPOSITIF PRESENTANT UNE CONNEXION PAR ENCLIQUETAGE DETACHABLE

(30) Priorität: 05.08.2005 DE 102005036904
(43) Veröffentlichungstag der Anmeldung: 23.04.2008
(73) Patentinhaber: A. RAYMOND et Cie, 38000 Grenoble (FR)
(72) Erfinder: TREMMEL, Günter, 79739 Schwörstadt (DE); KUPEK, Alain, F-68270 Wittenheim (FR); WEISSENFELD, Ronnie, 79588 Efringen-Kirchen (DE); KALTENPOTH, Gisela, 65760 Eschborn (DE)
(74) Vertreter: RACKETTE Patentanwälte PartG mbB
(86) Internationale Anmeldenummer: PCT/EP2006/005996
(87) Internationale Veröffentlichungsnummer: WO 2007/017006

(56) Entgegenhaltungen:
- EP-A2- 1 078 862
- GB-A- 646 603
- US-A- 3 843 013
- US-A- 4 500 008
- US-A- 5 706 968

## Beschreibung

Die Erfindung betrifft eine Vorrichtung gemäß dem Oberbegriff des Patentanspruches 1.

Eine derartige Vorrichtung ist aus gattungsgemäßer EP 1 078 862 A2 bekannt. Diese vorbekannte Vorrichtung verfügt über ein Korpusteil und über ein Deckelteil, das über eine lösbare Rastverbindung mit dem Korpusteil verbindbar ist. Die Rastverbindung weist einen Rasthaken mit wenigstens einer an einem Raststeg angesetzten Rastnase auf, die in einer Schließstellung einen Widerlagerabschnitt hintergreift. Weiterhin ist ein Lösemechanismus vorhanden, der bei Betätigung auf die Rastverbindung derart einwirkt, dass der Hintergriff der oder jeder Rastnase lösbar ist. Bei dieser vorbekannten Vorrichtung verfügt der Lösemechanismus über ein separates Schiebeteil, dass zum Lösen des Hintergriffs von einer Schließstellung in eine Freigabestellung verschiebbar ist.

Aus GB 646,603 A und aus US 4,500,008 A sind weitere Vorrichtungen mit einem Korpusteil und mit einem Deckelteil bekannt, bei denen jeweils das Deckelteil über eine lösbare Rastverbindung mit dem Korpusteil verbindbar ist. Hierzu ist bei einem Lösemechanismus ein um eine Achse schwenkbares, separates Hebelelement vorgesehen, mit dem bei Einwirken auf ein Handhabungsende gegen eine Federkraft ein Betätigungsende auf die oder jeder Rastnase zum Lösen eines Hintergriffs einwirkt.

Aus DE 93 12 585 U1 ist ebenfalls eine Vorrichtung mit einem Korpusteil und mit einem Deckelteil bekannt, die über eine lösbare Rastverbindung miteinander verbindbar sind. Die Rastverbindung verfügt über einen Rasthaken, der über eine Lasche entriegelbar ist. Der Rasthaken ist durch einen Schieber festlegbar, um ein unbeabsichtigtes Lösen des Rasthakens zu vermeiden. Allerdings ist diese Vorrichtung verhältnismäßig komplex aufgebaut und daher relativ kostspielig herzustellen.

Der Erfindung liegt die Aufgabe zugrunde, eine Vorrichtung der eingangs genannten Art anzugeben, die sich durch einen verhältnismäßig einfachen Aufbau auszeichnet und relativ kostengünstig herstellbar ist.

Diese Aufgabe wird bei einer Vorrichtung der eingangs genannten Art erfindungsgemäß mit den kennzeichnenden Merkmalen des Patentanspruches 1 gelöst.

Dadurch, dass die biegsame Drucklasche, die zum Lösen des Hintergriffs des Rasthakens zu betätigen ist, aus dem Deckelteil freigearbeitet und dass an ihr eine auf den Rasthaken einwirkende Laschenrippe angeformt ist, ist ein sehr einfacher und betriebssicherer mechanischer Aufbau erzielt, der zu einer verhältnismäßig kostengünstigen Herstellung führt.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Vorrichtung im Bereich einer Rastverbindung und
- Fig. 2: einen Schnitt durch ein weiteres Ausführungsbeispiel im Bereich der Rastverbindung.

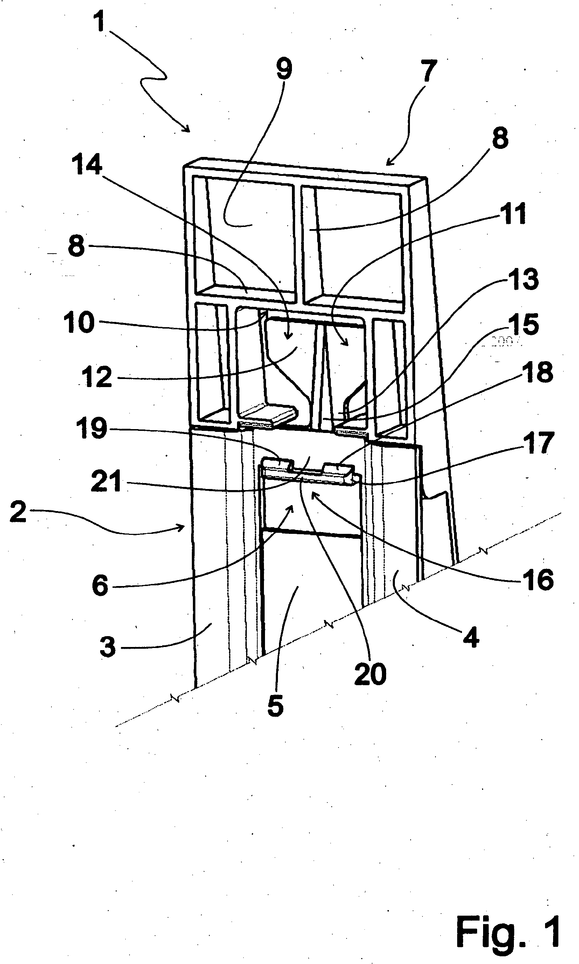

Fig. 1 zeigt in einer perspektivischen Ansicht ein Ausführungsbeispiel einer erfindungsgemäßen Vorrichtung in Gestalt eines Kabelkanales 1, der in Fig. 1 in einem zungenartig ausgebildeten Endbereich dargestellt ist. Der Kabelkanal 1 verfügt über ein Korpusteil 2, das mit einer Rückwand ausgebildet ist, die zwei randseitig angeordnete Außenabschnitte 3, 4 und einen zwischen den Außenabschnitten 3, 4 angeordneten Mittenabschnitt 5 aufweist. Der Mittenabschnitt 5 ist in seinem Endbereich mit einer Durchgriffsausnehmung 6 ausgebildet und gegenüber den Außenabschnitten 3, 4 in Richtung eines Deckelteiles 7 des Kabelkanales 1 versetzt.

Das Deckelteil 7 ist in seinem in Fig. 1 dargestellten Endbereich mit einer von einer Anzahl von Versteifungsrippen 8 verstärkten Deckfläche 9 ausgebildet. Aus der Deckfläche 9 ist durch Einbringen einer Freiarbeitung 10 eine längliche biegsame Drucklasche 11 eines Lösemechanismus herausgearbeitet, die über einen verhältnismäßig breiten Laschenkopf 12 sowie einen gegenüber dem Laschenkopf 12 schmaleren Laschensteg 13 verfügt. Auf der dem Korpusteil 2 zugewandten Seite der Drucklasche 11 ist in dem Deckelteil 7 ein Laschenraum 14 ausgebildet, in den die Drucklasche 11 eintauchen kann. In Längsrichtung der Drucklasche 12 ist an ihrer dem Korpusteil 2 zugewandten Seite eine Laschenrippe 15 angeformt, die sich beginnend von dem Laschenkopf 12 in Richtung des Laschensteges 13 mit zunehmender Höhe über die dem Korpusteil 2 zugewandte Seite der Drucklasche 11 erhebt.

Weiterhin ist in Fig. 1 eine Rastverbindung 16 erkennbar, die einen Rasthaken 17 mit angeformten Rastnasen 18, 19 aufweist, die in der Anordnung gemäß Fig. 1 durch den Durchgriffsraum 6 durchtreten und einen randseitig in Querrichtung verlaufenden Widerlagerabschnitt 21 des Mittenabschnittes 5 hintergreifen. Die Rastnasen 18, 19 sind an einem Raststeg 20 des Rasthakens 17 angesetzt.

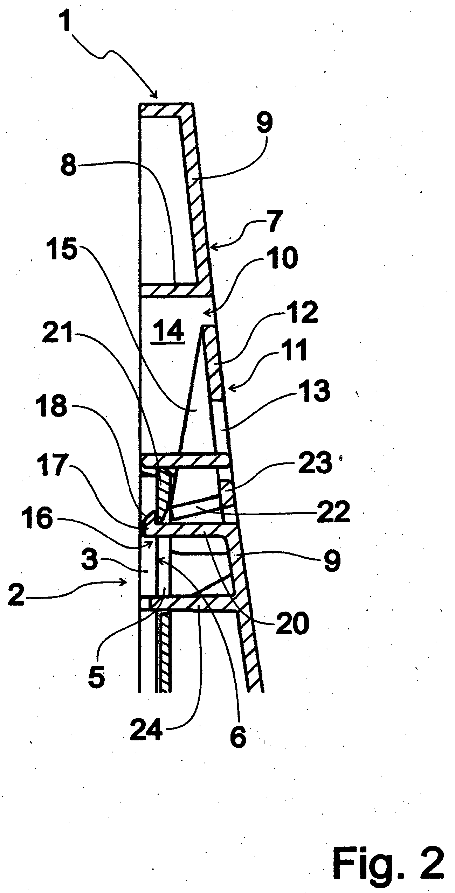

Fig. 2 zeigt im Schnitt ein weiteres Ausführungsbeispiel einer erfindungsgemäßen Vorrichtung, die im wesentlichen wie die erfindungsgemäße Vorrichtung gemäß Fig. 1 ausgebildet ist, wobei sich bei den erfindungsgemäßen Vorrichtungen gemäß Fig. 1 und Fig. 2 entsprechende Elemente mit den gleichen Bezugszeichen versehen sind. Aus Fig. 2 ist ersichtlich, dass sich die Laschenrippe 15 von dem Laschenkopf 12 bis hinter die dem Deckelteil 7 zugewandte Seite des Widerlagerabschnittes 21 erstreckt, und dass an dem der Rastverbindung 16 zugewandten Ende der Laschenrippe 15 ein Betätigungsstempel 22 angeformt ist. Weiterhin ist Fig. 2 zu entnehmen, dass die Drucklasche 11 über sich beidseitig des Laschensteges 13 erstreckende tordierbare Gelenkabschnitte 23 biegsam angebunden ist. Bei der erfindungsgemäßen Vorrichtung gemäß Fig. 2 ist eine an die Deckfläche 9 angeformte Stützzunge 24 vorhanden, die auf der dem Raststeg 20 gegenüberliegenden Seite durch die Durchgriffsausnehmung 6 durchgreift und bis zur Rückseite des Kabelkanales 2 reicht, um die Deckfläche 9 beim Drücken auf den Laschenkopf 12 abzustützen. Die Stützzunge dient weiterhin dazu, bei Ausüben einer Kraft auf das Deckelteil 7 in Richtung auf das Korpusteil 2 ein unbeabsichtigtes Lösen des Deckelteiles 7 möglichst zu verhindern oder zumindest zu erschweren.

Insbesondere lässt sich Fig. 2 entnehmen, dass in der in Fig. 2 dargestellten Ruhestellung der Betätigungsstempel 22 einen Abstand von dem die Rasthaken 17, 18 tragenden Raststeg 20 der Rastverbindung 16 aufweist, sodass ein lediglich geringfügiges Eindrücken der Drucklasche 11 in den Laschenraum 14 nicht zu einem Lösen des Hintergriffs der Rastnasen 18, 19 führt, sondern erst eine Bewegung der Drucklasche 11 über einen den Spalt zwischen dem Betätigungsstempel 22 und dem Raststeg 20 schließenden sowie der Höhe der Rastnasen 18, 19 entsprechenden Weg.

## Patentansprüche

1. Vorrichtung mit einem Korpusteil (2) und mit einem Deckelteil (7), das über eine lösbare Rastverbindung (16) mit dem Korpusteil (2) verbindbar ist, wobei die Rastverbindung (16) einen Rasthaken (17) mit wenigstens einer an einem Raststeg (20) angesetzten Rastnase (18, 19), die in einer Schließstellung einen Widerlagerabschnitt (21) hintergreift, und einen auf die Rastverbindung (16) einwirkenden Lösemechanismus aufweist, bei dessen Betätigung der Hintergriff der oder jeder Rastnase (18, 19) lösbar ist, **dadurch gekennzeichnet, dass** die Rastverbindung (16) eine in dem Deckelteil (7) freigearbeitete biegsame Drucklasche (11) aufweist, an deren der oder jeder Rastnase (18, 19) zugewandten Seite eine Laschenrippe (15) angeformt ist, unter deren Einwirkung auf den Rasthaken (17) der Hintergriff der oder jeder Rastnase (18, 19) lösbar ist.

2. Vorrichtung nach Anspruch 1, **dadurch gekennzeichnet, dass** die Drucklasche (11) einen relativ breiten Laschenkopf (12) sowie einen gegenüber dem Laschenkopf (12) schmaleren, an dem Laschenkopf (12) angeformten Laschensteg (13) aufweist, dessen von dem Laschenkopf (12) wegweisendes Ende über wenigstens einen tordierbaren Gelenkabschnitt (23) biegsam mit dem Deckelteil (7) in Verbindung steht.

3. Vorrichtung nach Anspruch 1 oder Anspruch 2, **dadurch gekennzeichnet, dass** an der Laschenrippe (15) an deren dem Raststeg (20) zugewandten Ende ein sich quer zu der Laschenrippe (15) erstreckender Betätigungsstempel (22) angeformt ist, der mit dem Raststeg (20) in Kontakt bringbar ist.

4. Vorrichtung nach Anspruch 3, **dadurch gekennzeichnet, dass** zwischen dem Betätigungsstempel (22) und dem Raststeg (20) in einer Ruhestellung ein Freiraum vorhanden ist.

5. Vorrichtung nach einem der Ansprüche 1 bis 4, **dadurch gekennzeichnet, dass** der Widerlagerabschnitt (21) zwischen zwei randseitig angeordneten Außenabschnitten (3, 4) des Korpusteiles (2) angeordnet und gegenüber diesen wenigstens soweit in Richtung des Deckelteiles (7) versetzt ist, dass die in Einführrichtung vordere Seite des Rasthakens (17) höchstens in der Ebene der Außenabschnitte (3, 4) liegt oder hinter diese zurücktritt.

## Claims

1. Device having a main-body part (2), and having a cover part (7) which can be connected to the main-body part (2) by a releasable latching connection (16), the latching connection (16) having a latching hook (17) which has, joined to a latch web (20), at least one latching nose (18, 19), which at least one latching nose (18, 19) fits behind an abutment portion (21) in a closed position and has a releasing mechanism which acts on the latching connection (16) and whose actuation is able to release the fitted-behind engagement of the or each latching nose (18, 19), **characterised in that** the latching connection (16) has a flexible tongue for pressure (11) which is so formed as to be free in the cover part (7) and on whose side adjacent the or each latching nose (18, 19) there is integrally formed a tongue rib (15) by whose action on the latching hook (17) the fitted-behind engagement of the or each latching nose (18, 19) can be released.

2. Device according to claim 1, **characterised in that** the tongue for pressure (11) has a relatively wide head (12) and, integrally formed on the head (12), a neck (13) which is narrower than the head (12) and whose end pointing away from the head (12) is flexibly connected to the cover part (7) by at least one twistable joint portion (23).

3. Device according to claim 1 or claim 2, **characterised in that** there is integrally formed on the tongue rib (15), at the end thereof adjacent the latch web (20), an actuating depressor (22) extending transversely to the tongue rib (15) which can be brought into contact with the latch web (20).

4. Device according to claim 3, **characterised in that** there is a gap between the actuating depressor (22) and the latch web (20) in a rest position.

5. Device according to one of claims 1 to 4, **characterised in that** the abutment portion (21) is arranged between two outer portions (3, 4) of the main-body part (2) which are arranged at edges thereof, and is offset from these in the direction of the cover part (7) at least sufficiently far for that face of the latching hook (17) which is at the front in the direction of insertion to be situated at most in the plane of the outer portions (3, 4) or to be set back therefrom in a rearward direction.

## Revendications

1. Dispositif comprenant un élément formant corps (2) et comprenant un élément formant couvercle (7) qui est destiné à être engagé en liaison d'accouplement avec l'élément formant corps (2) au moyen d'un élément de raccordement par encliquetage dissociable (16), l'élément de raccordement par encliquetage (16) comportant en l'occurrence un crochet formant cran d'arrêt (17) muni d'au-moins un élément d'accrochage par encastrement (18, 19) disposé attenant à un talon d'encastrement (20), qui, dans la position de fermeture du dispositif, vient cramponner par derrière une portion formant butée (21), et un mécanisme de désolidarisation agissant sur l'élément de raccordement par encliquetage (16), dont l'actionnement dégage le ou chaque élément d'accrochage par encastrement (18, 19) de sa ou de leur position d'accouplement en position de cramponnement par derrière, **caractérisé en ce que** l'élément de raccordement par encliquetage (16) comporte une languette actionnable par pression capable de réagir élastiquement (11), réalisée par dégagement dans l'élément formant couvercle (7), comprenant, réalisée solidaire par formage sur son côté orienté en direction du ou de chaque élément d'accrochage par encastrement (18, 19), une nervure pour languette (15), dont l'action que celle-ci exerce sur le crochet formant cran d'arrêt (17) permet de dégager le ou chaque élément d'accrochage par encastrement (18, 19) de sa ou de leur position d'accouplement par cramponnement par derrière.

2. Dispositif selon la revendication 1, **caractérisé en ce que** la languette actionnable par pression (11) comporte une portion formant tête (12) relativement large ainsi qu'une portion formant montant (13) plus étroite réalisée solidaire par formage de la portion formant tête de languette (12), dont l'extrémité orientée vers l'extérieur en partant de la portion formant tête de languette (12) est, avec la capacité de réagir élastiquement, en liaison de raccordement avec l'élément formant couvercle (7), par l'intermédiaire d'aumoins une portion formant articulation pouvant être sollicitée à la torsion (23).

3. Dispositif selon la revendication 1 ou la revendication 2, **caractérisé en ce que** la nervure à languette (15) comporte, réalisé solidaire par formage de son extrémité orientée vers le talon d'encastrement (20), un étai d'actionnement (22) s'étendant selon une orientation transversale par rapport à la nervure à languette (15), qui peut être mis en contact avec le talon d'encastrement (20).

4. Dispositif selon la revendication 3, **caractérisé en ce que** qu'il existe, en position neutre de repos, un espace vide entre l'étai d'actionnement (22) et le talon d'encastrement (20).

5. Dispositif selon l'une des revendications 1 à 4, **caractérisé en ce que** la portion formant butée (21) est disposée entre deux portions extérieures (3, 4) de rive de l'élément formant corps (2) et est décalée, par rapport à celle-ci, dans la direction de l'élément formant couvercle (7) dans une proportion telle que le côté antérieur, dans le sens de l'introduction, du crochet formant cran d'arrêt (17) se situe au maximum dans le plan des portion extérieures (3, 4) ou occupe une position de recul par rapport à celui-ci.
